# EUROPÄISCHE PATENTSCHRIFT

(11) **EP 0 561 354 B1**
(45) Veröffentlichungstag und Bekanntmachung des Hinweises auf die Patenterteilung: **27.09.1995**
(21) Anmeldenummer: 93104279.0
(22) Anmeldetag: 16.03.1993
(51) Int. Cl.: F16B 5/06

(54) **Montageklammer**
Mounting clip
Crampon de montage

(30) Priorität: 16.03.1992 DE 4208400; 17.03.1992 DE 9203594 U
(43) Veröffentlichungstag der Anmeldung: 22.09.1993
(73) Patentinhaber: Gmeilbauer, Engelbert, D-82229 Seefeld (DE)
(72) Erfinder: Gmeilbauer, Engelbert, D-82229 Seefeld (DE)
(74) Vertreter: Petra, Elke, Dipl.-Ing.

(56) Entgegenhaltungen:
- CH-A- 578 127
- DE-U- 7 833 043
- FR-A- 2 151 236
- FR-A- 2 558 334
- FR-A- 2 618 861
- GB-A- 2 018 145
- GB-A- 2 085 955
- GB-A- 2 094 384
- GB-A- 2 108 190

## Beschreibung

Die Erfindung bezieht sich auf eine Montageklammer zum Zusammenhalten von Blechen im Karosseriebau.

Es ist bekannt, bei Karosseriereparaturen Feststellzangen (gerade oder abgewinkelt) zum Zusammenhalten von Blechen zu verwenden.

Als Nachteil ergibt sich bei derartigen Zangen ihr hoher Preis, großer Verschleiß, da sie aus verschiedenen mechanischen Teilen bestehen und ihr großes Bauvolumen, so daß sie nicht überall verwendbar sind.

Derartige Feststellzangen sind deshalb beim Erneuern beispielsweise von A- und B-Säulen, Heckschürzen, Seitenteilen und Einstiegen wegen ihrer Größe nur sehr beschränkt einsetzbar, da vor dem Schweißen der Sitz der Türen bzw. der Heckklappe geprüft werden muß.

Bisher wurden Blechteile mit derartigen Feststellzangen zusammengehalten und ein bis zwei Schweißpunkte gesetzt. Dann wurde die Zange entfernt und der richtige Sitz z.B. der Tür kontrolliert. Bei richtigem Sitz konnte dann mit Hilfe von mehreren Zangen fertiggeschweißt werden.

Bei nicht richtigem Sitz der Türen war es nötig die Schweißpunkte zu entfernen und den Arbeitsgang von neuem zu beginnen.

FR-A-2 558 334 (Fig.1) beschreibt eine einstückige Klammer mit zwei Klammerschenkeln und einer in einer Rundung endenden Spannfuge.

Bekannt sind auch Federklemmen nach dem DE-GM 7 833 043. Sie dienen zum Befestigen eines Elementes an einem zweiten Element, etwa bei der Montage eines Stoßfängers für ein Kraftfahrzeug.

Diese Federklemmen sind ebenfalls als einstückiges Werkstück mit zwei Schenkeln und einer zwischen diesen Schenkeln liegenden Spannfuge mit Bohrung zur Verteilung der Kräfte vorgesehen. Auf Grund ihres Aufbaues und ihrer Konstruktion ist diese Federklemme aber nicht zur Verwendung im Karosseriebau geeignet, da mit ihr nicht die notwendigen großen Haltekräfte aufgebracht werden können.

Ähnliches gilt auch für die aus der GB-PS 2 085 955 bekannten Klemme, die zwei Schenkelenden, eine Spannfuge sowie zwei Abziehfugen zeigt. Auch mit dieser Klemme können lediglich geringe Kräfte, etwa zum Halten von Skiern, aber nicht die zur Verwendung im Karosseriebau notwendigen großen Kräfte aufgebracht werden.

Der Erfindung liegt deshalb die Aufgabe zugrunde, eingepaßte Blechersatzteile so zu fixieren, daß der richtige Sitz auch ohne feste Verbindung, etwa durch Schweißpunkte, kontrolliert werden kann.

Gelöst wird diese Aufgabe durch die Merkmale des Anspruches 1.

Sinnvolle Weiterbildungen der erfindungsgemäßen Montageklammer sind in den Unteransprüchen 2 und 3 zu finden.

Mit der erfindungsgemäßen Montageklammer ist es möglich, auch dann, wenn die Türen bzw. die Heckklappe geschlossen werden müssen und die Fixierungen an den Türrahmen anzubringen sind, die Blechersatzteile sicher zu halten und dabei die Möglichkeit der Sitzkontrolle zu gewährleisten.

Dies ist auf Grund des geringen Platzbedarfs, der nicht größer ist als der der Türdichtungen, möglich.

Die erfindungsgemäße Montageklammer ist preiswert herstellbar, da sie aus im Werkzeugbau üblichen Einsatzstahl, angereichert mit Kohlenstoff, welcher außen gehärtet ist, hergestellt wird.

Der Gegenstand der Erfindung wird nachstehend anhand eines Ausführungsbeispiels erläutert.

Es zeigen:
Figur 1 eine Draufsicht auf die erfindungsgemäße Montageklammer;
Figur 2 eine Seitenansicht der erfindungsgemäßen Montageklammer.

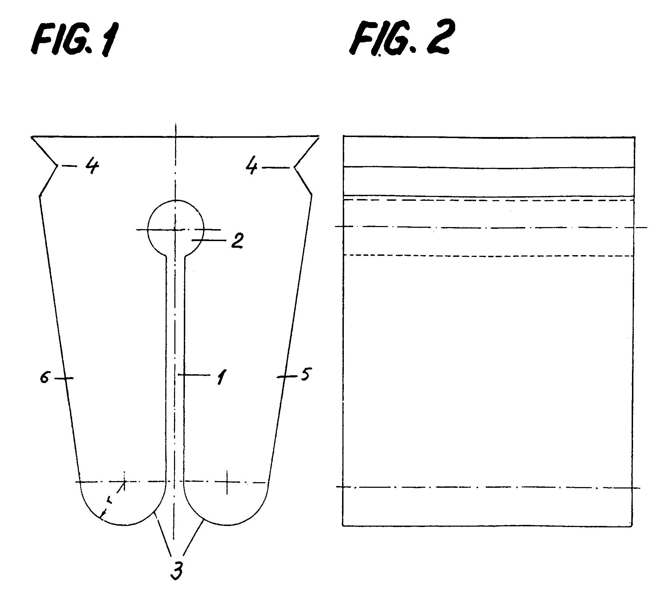

In der Figur 1 ist eine Montageklammer mit zwei Klammerschenkeln (5, 6) sowie einer zwischen diesen Klammerschenkeln angeordneten Spannfuge (1) erkennbar. Die Spannfuge läuft in einer Bohrung (2) aus, die der Verteilung der Kräfte in der Montageklammer dient.

Die Schenkelenden sind mit Abrundungen (3) versehen, zur Erleichterung des Einführens der zu verbindenden Bleche in die Spannfuge. An der Klammer sind außenseitig an den dem Werkstück abgewandten Enden Abziehfugen (4) vorgesehen.

Zur Verwendung der Klammern werden diese mit den Abrundungen (3) am Stoß der zu verbindenden Bleche angesetzt und mit Hammerschlägen auf das dem Werkstück abgewandte Ende der Montageklammer über die Bleche geschlagen. Die Bleche dringen dabei in die Spannfuge ein und werden durch die entstehende Spannung der Montageklammer zusammengepreßt.

Das Abziehen der Klammern erfolgt mit einer herkömmlichen Karosseriezange.

Die Montageklammer kann beliebig oft verwendet werden. Je nach den Blechstärken sowie der Anzahl der zusammenzufügenden Bleche finden Montageklammern mit unterschiedlichen Abmessungen von Klemmfuge und Bohrung Verwendung.

## Patentansprüche

1. Montageklammer zum Zusammenhalten von Blechen im Karosseriebau, umfassend zwei Klammerschenkel (5, 6), die eine Spannfuge (1), welche in einer Bohrung (2) zur Verteilung der Kräfte endet, zwischen sich einschließen,
wobei die Breite der Spannfuge (1) etwas kleiner gehalten ist als die Breite der addierten Blechstarken der zusammenzuhaltenden Bleche und mit zwei an den Außenseiten der als einstückiges Werkstück ausgebildeten Montageklammer am werkstückabgewandten Ende vorgesehenen Abziehfugen (4) zum Entfernen der Montageklammer.

2. Montageklammer nach Anspruch 1,
dadurch gekennzeichnet, daß die Schenkelbreite parallel zur Spannfuge (1) zur Öffnung der Spannfuge hin außen kontinuierlich abnimmt und daß die Schenkelenden werkstückseitig Abrundungen (3) aufweisen.

3. Montageklammer nach Anspruch 1 oder 2,
dadurch gekennzeichnet, daß die Montageklammer aus Einsatzstahl, der mit Kohlenstoff angereichert und außen gehärtet ist, besteht.

## Claims

1. Assembly clamp for holding together panels in body construction, comprising two limbs (5, 6) which enclose between them a clamping gap (1) which ends in a drilling (2) for distribution of the forces, the width of the clamping gap (1) being kept somewhat smaller than the width of the cumulative panel thicknesses of the panels to be held together, and with two detaching notches (4) provided on the outsides of the assembly clamp embodied as a one-piece tool at the end remote from the workpiece for removal of the assembly clamp.

2. Assembly clamp according to claim 1, characterised in that the limb width parallel to the clamping gap (1) decreases continuously towards the opening of the clamping gap on the outside and in that the ends of the limbs exhibit rounded portions (3) on the workpiece side.

3. Assembly clamp according to claim 1 or 2, characterised in that the assembly clamp is made of hardened steel which is enriched with carbon and hardened on the outside.

## Revendications

1. Agrafe de montage servant à maintenir assemblées des tôles lors de la construction de carrosseries, comprenant deux branches (5,6), qui délimitent entre elles une fente de serrage (1), qui se termine par un perçage (2) pour répartir les forces, la largeur de la fente de séparation (1) étant maintenue à une valeur légèrement inférieure à la largeur des épaisseurs additionnées des tôles devant être maintenues assemblées, et comportant deux rainures de retrait (4), qui sont prévues sur les deux faces extérieures de l'agrafe de montage, réalisée sous la forme d'une pièce d'un seul tenant, sur l'extrémité à l'opposé de la pièce, pour retirer l'agrafe de montage.

2. Agrafe de montage suivant la revendication 1, caractérisée par le fait que la largeur des branches parallèlement à la fente de serrage (1) diminue continûment à l'extérieur en direction de l'ouverture de la fente de serrage et que les extrémités des branches possèdent des arrondis (3) du côté de la pièce.

3. Agrafe de montage suivant la revendication 1 ou 2, caractérisée par le fait que l'agrafe de montage est en acier de cémentation, qui est enrichi en carbone et est trempé extérieurement.
